# EUROPÄISCHE PATENTANMELDUNG

(11) **EP 1 418 450 A2**
(43) Veröffentlichungstag der Anmeldung: **12.05.2004**
(21) Anmeldenummer: 03024214.3
(22) Anmeldetag: 22.10.2003
(51) Int. Cl.: G02B 6/00, G01D 7/00

(54) **Hinterleuchtbares Display**

(30) Priorität: 11.11.2002 DE 10252630
(71) Anmelder: Preh-Werke GmbH & Co. KG, 97616 Bad Neustadt a.d. Saale (DE)
(72) Erfinder: Dinkel, Eugen, 97724 Burglauer (DE); Söder, Franz, 97657 Sandberg (DE)
(74) Vertreter: Dietrich, Barbara

(57) **Zusammenfassung**

Es wird vorgeschlagen, die Anzeige bzw. die Hinterleuchtung eines Displays (2) in Abhängigkeit von vorgegebenen Informationen farbmäßig so zu verändern, dass diese Änderungen/Informationen als Mischfarben oder Farbveränderungen bzw. unterschiedliche Farbeffekte vom Benutzer erkannt werden.

Dazu ist hinter dem vorzugsweise LC-Display (2) eine Lichtleitplatte (3) vorgesehen, in die das Licht von wenigstens zwei verschiedenfarbigen Lichtquellen (4, 5) eingekoppelt wird. Die jeweilige Farbintensität der Lichtquellen (4, 5) ist dabei abhängig von für einzelne Zustände/Funktionen und Warngrößen abgelegte Farbkombinationen, die durch die Lichtquellen (4, 5) als Hintergrundbeleuchtung eingestellt und vom Benutzer erkannt werden sollen. Bei Veränderung des Sollwertes bzw. der Funktion soll diese Hintergrundbeleuchtung vorzugsweise gleitend angepaßt sein, wozu die unterschiedlich farbigen LED's (4, 5) je nach eingestelltem Sollwert/Funktion unterschiedlich hell betrieben werden, um den gleitenden Farbeffekt zu realisieren.

## Beschreibung

Anzeigen an Hausgeräten oder dergleichen dienen zur Angabe von eingestellten Funktionen, Temperaturen, Soll- und Ist-Vorgaben etc. an eine Bedienperson. Insbesondere an einem Durchlauferhitzer, Heißwasserbereiter oder dergleichen wird die vom System erzeugte bzw. eingestellte Temperatur angezeigt. Die Anzeige ist dabei einfarbig oder wird mit einer Grundfarbe hinterleuchtet.

In der DE 101 14 194 A1 werden ein Verfahren und eine Vorrichtung zum Einstellen einer Wertes einer Betriebsvorgabe eines Heißwasserbereiters offenbart, welches eine Fernbedienung aufweist und bei dem durch eine Anzeige in der Fernbedienung als auch am Hauptgerät selbst die vorgegebene Solltemperatur angezeigt wird.

Ein gasbeheizter Wassererhitzer ist auch aus der DE 198 25 138 A1 bekannt. Hier wird eine elektrische Betriebsanzeige zur Flammenerkennung erwähnt.

In der DE 199 32 142 A1 wird ausgeführt, dass zur optischen Warnung vor heißen Geräteteilen eine Hitzewarneinrichtung derart ausgebildet, dass sie nur durch die Wärmeenergie des von der Heizquelle erwärmten Geräteteiles die optische Anzeige erzeugt. Ein zwischen der Anzeigeplatte und dem Boden befindlicher Farbumschlag ist dabei von der Art, dass diese Schicht ihre Farbe in Abhängigkeit der Temperatur ändert.

Auch ein Gehäuse mit Temperaturwarnung ist bekannt und in der DE 101 10 019 C1 beschrieben. Das Gehäuse weist ein Material auf, dass wenigstens teilweise eine Veränderung seiner Farbe anzeigt, wenn eine vorbestimmte Warntemperatur überstiegen wird.

Eine Einrichtung zur gezielten Beleuchtung allgemein ist in der DE 696 15 841 T2 (EP 0 835 407 B1) beschrieben. Diese Beleuchtungsvorrichtung umfasst eine Lichtquelle und ein darüber befindliches optisches Element mit innerer Totalreflexion zum Erfassen und Leiten des von der Lichtquelle emittierten Lichts in nur eine Richtung. Getrennt vom optischen Element weist die Vorrichtung einen Lichtleiter auf, in welchem das optische Element angeordnet ist.

Ein Verfahren und eine Vorrichtung zur mehrfarbigen Beleuchtung durch LED's ist der EP 1 016 062 B1 entnehmbar. Diese Beleuchtungsvorrichtung besitzt unter anderem zumindest zwei verschiedenfarbige Strahler.

Die Erfindung stellt sich die Aufgabe, eine Vorrichtung anzugeben, durch Änderung, insbesondere Warnsituationen, visuell schnell durch den Benutzer erkennbar sind.

Gelöst wird die Aufgabe durch die Merkmale des Anspruch 1.

Dabei liegt der Erfindung die Idee zugrunde, die Anzeige bzw. die Hinterleuchtung eines Displays in Abhängigkeit von vorgegebenen Informationen farbmäßig so zu verändern, dass diese Änderungen/Informationen als Mischfarben oder Farbveränderungen bzw. unterschiedliche Farbeffekte vom Benutzer erkannt werden.
Dazu ist hinter dem vorzugsweise LC-Display eine Lichtleitplatte vorgesehen, in die das Licht von wenigstens zwei verschiedenfarbigen Lichtquellen eingekoppelt wird. Die jeweilige Farbintensität der Lichtquellen ist dabei abhängig von für einzelne Zustände/Funktionen und Warngrößen abgelegte Farbkombinationen, die durch die Lichtquellen als Hintergrundbeleuchtung eingestellt und vom Benutzer erkannt werden sollen. Bei Veränderung des Sollwertes bzw. der Funktion wird diese Hintergrundbeleuchtung vorzugsweise gleitend angepaßt, wozu die unterschiedlich farbigen LED's je nach eingestelltem Sollwert/Funktion unterschiedlich hell betrieben werden, um den gleitenden Farbeffekt zu realisieren.
Die Einstellung bzw. Veränderung des Sollwertes kann über ein Potentiometer, einen Inkrementengeber, über Tasten oder berührungssensitive Oberflächen eingestellt werden.
Alternativ kann die Hintergrundbeleuchtung auch durch Farbumschlag von einem eingestellten Wert auf einen anderen fest eingestellten Wert umspringen.
Die Palette der verwendbaren Farben ist dabei nicht eingeschränkt. Farbmischungen sind daher individuell vorgeb- und einstellbar. Ursächlich werden die einzelnen Farbeffekte durch die Farben der verwendeten Lichtquellen realisierbar.

Diese Farben können auch durch unterschiedliche LED-Ansteuerungen eingestellt werden, wozu dann LED's verwendet werden, die selbst verschiedene Wellenlängen abstrahlen können.

Ein Vorteil dieser Anzeige ist, dass das Display flächig und zudem mindestens zweifarbig hinterleuchtet wird, wodurch eine optische Kopplung einer Sollwertvorgabe (Information) mit der Hinterleuchtung (visuelle Darstellung) geschaffen wird.

Anhand eines Ausführungsbeispieles mit Zeichnung soll die Erfindung näher erläutert werden.

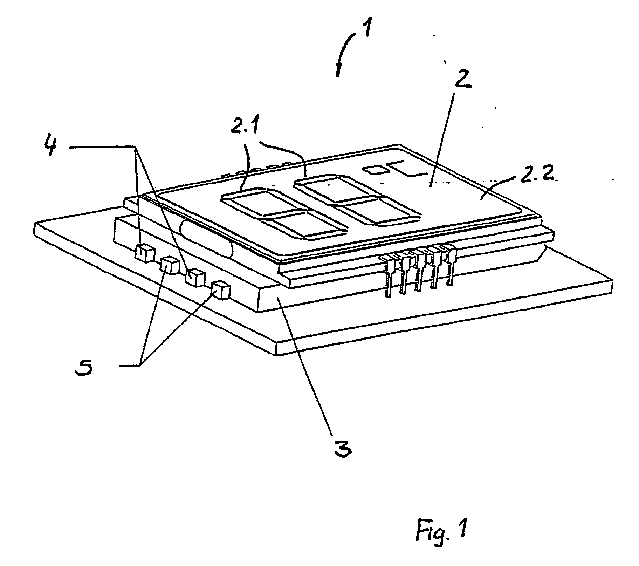

Es zeigt
- Fig. 1: einen Aufbau einer Anzeige,
- Fig. 2: ein Anwendungsbeispiel,
- Fig. 3 a - c: Darstellung von unterschiedlichen Farbanzeigen.

In Fig. ist eine Vorrichtung 1 dargestellt, die aus einem Display 2, einem Lichtleiter 3, eine Lichtleitplatte, und wenigstens zwei unterschiedliche Farb-LED's 4, 5 besteht. Im vorliegenden Ausführungsbeispiel sind diese Farben "rot" und "blau". Das Display 2 weist neben einer Anzeige 2.1 der Funktion/eines Wertes einen durchscheinbaren Bereich 2.2 auf. Bevorzugt handelt es sich beim Display 2 um ein LC-Display.

Als Anwendungsbeispiel ist ein Durchtauferhitzer 10 vorgesehen. Dieser umfasst neben der Vorrichtung 1 ein Bedienelement 11 zur Einstellung einer Sollwertvorgabe, hier der Solltemperatur. Beide sind mit einer Steuereinheit 12 des Durchlauferhitzers 10 elektrisch verbunden. Die Steuereinheit 12 steht mit einem Speicher 13 elektrisch in Verbindung. Die LED's 4, 5 der Vorrichtung 1 werden in Abhängigkeit eines im Speicher 13 entsprechend den Anforderungen hinterlegten Ansteuerungsmusters für die LED's 4, 5 angesteuert (wird noch ausgeführt).

Die Eingabe der Sollwertvorgabe kann aber auch durch eine Fernbedienung 20, funkferngesteuert oder mittels Infrarot, erfolgen, in der sich ein Bedienelement 21 befindet. In diesem Fall kann auch eine Vorrichtung 1 in der Fernbedienung vorgesehen werden.

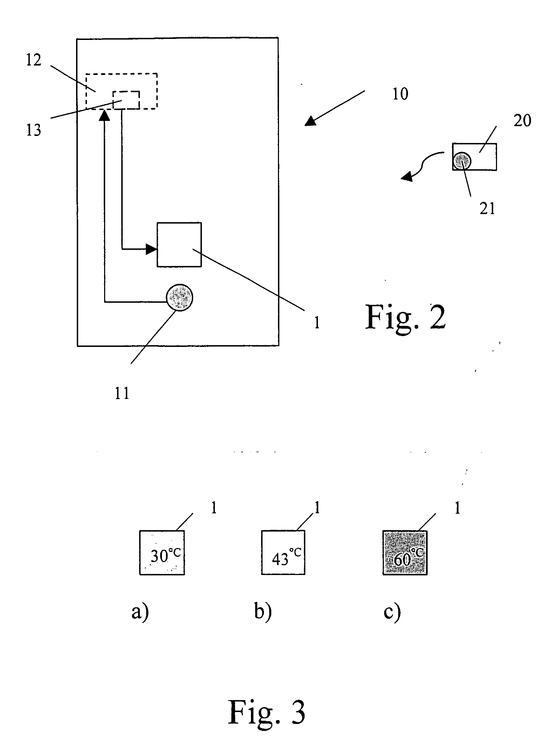

Anhand der Fig. 3 a bis 3 c soll das Prinzip veranschaulicht werden.

Als ein erster Sollwert werden 30 °C am Bedienelement 11, 21 eingestellt, welcher an die Steuereinheit 12 gelangt und vom LC-Display 2 angezeigt wird. Parallel dazu werden die LED's 4, 5 angesteuert, wodurch sich beispielsweise ein blaue Hinterleuchtung einstellt, da hier nur die LED 5 angesteuert wird.
Die Regelung und Steuerung der eingestellten Temperatur am Durchlauferhitzer 10 erfolgt herkömmlich.

Bei einer Veränderung bzw. Einstellung der Solltemperatur auf 43°C durch das Bedienelement 11, 21 und die Steuereinrichtung wird dies auf dem LC-Display 2 angezeigt, wobei das Display 2 nunmehr nicht mehr blau, sondern beispielsweise violettrosa hinterleuchtet wird, da beide LED'S 4, 5 so angesteuert werden, dass beide im Lichtleiter 3 diese Mischfarbe/diesen Farbeffekt bewirken.

Wird eine kritische Temperatur, beispielsweise 60°C eingestellt, erfolgt eine rote Hinterleuchtung des LC-Displays 2. Die LED 5 wird dann nicht angesteuert.

Dazu sind, wie bereits ausgeführt, je nach Temperaturwert im Speicher 13 die entsprechenden Ansteuerungsmuster zur Realisierung der Farbeffekte für die LED's 4, 5 hinterlegt.
Es versteht sich, dass die Anzahl der jeweiligen verschiedenfarbigen LED' 4, 5 abhängig der Größe bzw. Abmaße der Lichtleitplatte 3 ist.
Das hier angeführte Ausführungsbeispiel ist nicht auf den darin beschriebenen Einsatz beschränkt.
Neben der Warnmöglichkeit durch farbliche Änderung der Anzeige bzw. deren Hintergrundbeleuchtung, können auch Änderungen, beispielsweise zu kritischen Funktionszustände hin, für den Benutzer visuell dargestellt werden. Bevorzugt sind Signalfarben/-töne zu verwenden, wenn kritische Zustände erreicht werden.

Neben den Durchlauferhitzern werden als Hausgeräte auch Herde und Backöfen aller Art , Waschmaschinen, Trockner etc. betrachtet.

Des Weiteren ist mit einer derartigen Vorrichtung 1 auch ein Behaglichkeitsgefühl darstellbar. Bekanntlich ist das Wohnbehaglichkeitsgefühl abhängig von der relativen Luftfeuchte und der Raumtemperatur in einem Zimmer/Raum. Innerhalb einer Behaglichkeitskurve können dabei unterschiedliche relative Feuchtewerte mit unterschiedlichen Temperaturwerten harmonieren. D.h., bei einer Luftfeuchte von 40 % und einer Temperatur von 21 °C fühlt sich eine Person ebenso behaglich, wie bei einer Luftfeuchte von 65 % und einer Temperatur 24°C. Dieser Behaglichkeitsbereich kann beispielsweise mittels einem angenehmen Gelb-Ton angezeigt werden. Änderungen des Behaglichkeitszustandes in "unbehaglich trocken" oder "unbehaglich feucht" werden dann durch Farbänderungen der Hinterleuchtung beispielsweise des die Temperatur anzeigen LC-Displays 2 angezeigt. Insbesondere ein notwendiges Lüften (beispielsweise gegen einen Schimmelbefall) kann dann durch einen Rot-Ton hinter dem LC-Displays 2 kenntlich gemacht werden. Messsensoren sind dabei in einfachster Form beispielsweise ein herkömmlicher Feuchtesensor und ein herkömmlicher Temperatursensor.

Ein weiterer Einsatz der Vorrichtung 1 wäre auch in einem Kraftfahrzeug denkbar, insbesondere bei einer Hinterleuchtung einer Tankanzeige, einer Geschwindigkeitsanzeige, einer Anzeige der Bremssteine, der Bremsmittelanzeige etc..

## Patentansprüche

1. Vorrichtung (1) für eine Funktions- und/oder Wertanzeige, aufweisend ein Display (2), einen dahinter befindlichen Lichtleiter (3) in Form einer Lichtleitplatte sowie wenigstens zwei eine Farbe abstrahlende LED (4, 5), wobei das Display (2) in Abhängigkeit einer eingestellten Funktion und/oder Wertes mit unterschiedlichen Farbeffekten und flächig hinterleuchtet werden kann.

2. Vorrichtung nach Anspruch 1, **dadurch gekennzeichnet, dass** die LED's (4, 5) unterschiedliche farbige LED's sind.

3. Vorrichtung nach Anspruch 1, **dadurch gekennzeichnet, dass** die LED (4, 5) Licht mit unterschiedlichen Wellenlängen ausstrahlen.

4. Vorrichtung nach einem der Ansprüche 1 bis 3, **dadurch gekennzeichnet, dass** das Display (2) ein LC-Display ist.

5. Vorrichtung nach einem der Ansprüche 1 bis 4, **dadurch gekennzeichnet, dass** ein die LED's (4, 5) entsprechendes Ansteuermuster in einem Speicher (13) hinterlegt ist.

6. Verwendung der Vorrichtung nach einem der Ansprüche 1 bis 5 in einem Hausgerät.

7. Verwendung der Vorrichtung nach Anspruch 6 in einem Durchlauferhitzer (10).

8. Verwendung der Vorrichtung nach einem der Ansprüche 1 bis 5 zur Behaglichkeitsanzeige in einem Raum.

9. Verwendung der Vorrichtung nach einem der Ansprüche 1 bis 5 in einem Kraftfahrzeug.
